# EUROPÄISCHE PATENTSCHRIFT

(11) **EP 3 247 010 B1**
(45) Veröffentlichungstag und Bekanntmachung des Hinweises auf die Patenterteilung: **16.09.2020**
(21) Anmeldenummer: 16191898.2
(22) Anmeldetag: 30.09.2016
(51) Int. Cl.: H02B 1/052, H01R 9/28, H01R 13/447, H01R 9/24

(54) **VORRICHTUNG ZUM SICHERN EINES OBJEKTES AUF EINER SCHIENE**
DEVICE FOR FIXING AN OBJECT TO A RAIL
DISPOSITIF DE FIXATION D'UN OBJET SUR UN RAIL

(30) Priorität: 17.05.2016 EP 16169977
(43) Veröffentlichungstag der Anmeldung: 22.11.2017
(73) Patentinhaber: Wöhner GmbH & Co. KG Elektrotechnische Systeme, 96472 Rödental (DE)
(72) Erfinder: STEINBERGER, Philipp, 96450 Coburg (DE); MASEL, Joram, 96317 Kronach (DE)
(74) Vertreter: Isarpatent

(56) Entgegenhaltungen:
- EP-A1- 1 672 743
- EP-A1- 1 742 315
- WO-A1-2013/054873
- DE-U1- 29 806 691
- DE-U1- 29 806 691
- DE-U1-202015 106 673

## Beschreibung

Die Erfindung betrifft eine Vorrichtung, insbesondere ein Rastbauelement, zum Sichern eines Objektes auf einer Schiene, beispielsweise einer Hut- oder Stromsammelschiene.

In vielen Anwendungen ist es notwendig, eines oder mehrere Objekte auf Schienen, beispielsweise Hut- oder Stromsammelschienen, anzubringen. Bei dem Objekt kann es sich beispielsweise um ein elektrisches Modul oder elektrisches Gerät handeln, welches über die Schiene oder eine andere Schiene mit elektrischem Strom versorgt wird.

Die Montage von Objekten beispielsweise mittels Schrauben oder Adaptereinrichtungen auf Schienen ist dabei bei herkömmlichen Montagesystemen mühsam und zeitraubend.

Aus der WO 2013/054873 A1 ist ein Gehäuse für ein elektrisches Gerät bekannt, welches einen Gehäusehauptkörper und einem Schieber aufweist. Der Schieber weist ein Verbindungselement auf, das mit einem oberen beweglichen Abschnitt und einem unteren beweglichen Abschnitts verbunden ist. Der obere bewegliche Abschnitt hat einen oberen Verriegelungsabschnitt und der untere bewegliche Abschnitt hat einen unteren Verriegelungsabschnitt. Das Verbindungselement umfasst einen Dreharm, der drehbar an dem Gehäusehauptkörper angeordnet ist, einen ersten Verbindungsabschnitt, der den oberen beweglichen Abschnitt und den rotierenden Arm verbindet; und einen zweiten Verbindungsabschnitt, der den unteren beweglichen Abschnitt und den rotierenden Arm verbindet. Der erste Verbindungsabschnitt und der zweite Verbindungsabschnitt weisen eine bogenförmige Form auf.

Des Weiteren ist aus der DE 298 06 691 U1 ein Montagefuß für ein Einbaugehäuse bekannt, bei dem die beiden Rasthaken des Montagefußes in der Rast- oder Montagestellung die freien Enden der Schenkel einer Tragschiene 4 übergreifen.

Aus der EP 1 672 743 A1 ist eine Verriegelungsvorrichtung zur Verriegelung eines elektrischen Geräts auf einer Tragschiene mit zwei einander gegenüberliegenden Randleisten bekannt. Die Verriegelungsvorrichtung weist zwei Befestigungseinrichtungen auf in Form eines Hakens und zweier Hebelstangen.

Es ist daher eine Aufgabe der vorliegenden Erfindung, eine Vorrichtung zum Sichern eines Objektes auf einer Schiene zu schaffen, bei der das Anbringen und Entfernen eines Objektes von der Schiene mühelos und in kurzer Zeit erfolgen kann.

Diese Aufgabe wird erfindungsgemäß durch eine Vorrichtung zum Sichern eines Objektes auf einer Schiene mit den in Patentanspruch 1 angegebenen Merkmalen gelöst.

Die Erfindung schafft demnach eine Vorrichtung zum Sichern eines Objektes auf einer Schiene mit
einem länglich ausgebildeten, quer auf die Schiene aufsetzbaren Grundkörper, der an einem Ende ein integriertes Betätigungselement aufweist, das bei Betätigung durch einen Nutzer in dem Betätigungselement integrierte gegenüberliegende Rasthaken, welche geeignet sind, die Schiene zu hintergreifen, in entgegengesetzte Richtungen bewegt.
Die erfindungsgemäße Vorrichtung bietet den Vorteil, dass das Objekt in einfacher Weise auf eine Schiene montiert werden kann und das betreffende Objekt auf der Schiene sichert.
Die erfindungsgemäße Vorrichtung bietet weiterhin den Vorteil, dass ein bereits auf einer Schiene befindliches montiertes Objekt in einfacher Weise schnell von der Schiene demontiert bzw. von ihr entfernt werden kann.
Die Zeit zur Montage bzw. Demontage eines Objektes auf einer Schiene wird durch die erfindungsgemäße Vorrichtung minimiert.

Bei einer weiteren möglichen Ausführungsform der erfindungsgemäßen Vorrichtung ist der Umlenkhebel über eine mäanderförmige Verbindung, die an der Vorrichtung angeformt ist.
Bei einer weiteren möglichen Ausführungsform der erfindungsgemäßen Vorrichtung ist der Umlenkhebel symmetrisch ausgebildet.

Bei einer weiteren möglichen Ausführungsform der erfindungsgemäßen Vorrichtung liegt der Lagerpunkt des Umlenkhebels auf einer Längsachse des länglich ausgebildeten Grundkörpers der Vorrichtung.

Bei einer möglichen Ausführungsform der erfindungsgemäßen Vorrichtung weisen die gegenüberliegenden Rasthaken jeweils angeformte Rückstellfedern auf.
Bei einer weiteren möglichen Ausführungsform der erfindungsgemäßen Vorrichtung sind die Rückstellfedern in den Grundkörper integriert.
Bei einer weiteren möglichen Ausführungsform der erfindungsgemäßen Vorrichtung werden die Rückstellfedern durch separate Federelemente gebildet.

Bei einer weiteren möglichen Ausführungsform der erfindungsgemäßen Vorrichtung ist die Vorrichtung an das auf die Schiene anzubringende Objekt angeformt.

Bei einer weiteren möglichen Ausführungsform der erfindungsgemäßen Vorrichtung hintergreifen die durch die Betätigung des Betätigungselementes aufeinander zubewegten gegenüberliegenden Rasthaken in einer Einrastposition der Vorrichtung die jeweilige Schiene.

Bei einer weiteren möglichen Ausführungsform der erfindungsgemäßen Vorrichtung geben die durch die Betätigung des Betätigungselementes auseinander bewegten gegenüberliegenden Rasthaken in einer Parkposition die Schiene zum Lösen der Vorrichtung von der Schiene frei.

Bei einer weiteren möglichen Ausführungsform der erfindungsgemäßen Vorrichtung sind die Rasthaken derart ausgebildet, dass sie Schienen unterschiedlicher Höhe bzw. Dicke hintergreifen.

Bei einer weiteren möglichen Ausführungsform der erfindungsgemäßen Vorrichtung ist das Betätigungselement der Vorrichtung durch einen Nutzer mittels eines Schraubendrehers betätigbar.

Bei einer weiteren möglichen Ausführungsform der erfindungsgemäßen Vorrichtung besteht der länglich ausgebildete Grundkörper der Vorrichtung aus Kunststoff.

Im Weiteren werden mögliche Ausführungsformen der erfindungsgemäßen Sicherungsvorrichtung zum Sichern eines Objektes auf einer Schiene unter Bezugnahme auf die beigefügten Figuren beschrieben.

Es zeigen:
- Fig. 1: eine perspektivische Ansicht von hinten auf eine mögliche Ausführungsform eines berührungsgeschützten Grundplattenmoduls eines Stromsammelschienensystems, welches über erfindungsgemäße Sicherungsvorrichtungen verfügt, als Anwendungsbeispiel;
- Fig. 2: eine Frontalansicht auf das in Fig. 1 dargestellte berührungsgeschützte Grundplattenmodul von hinten, wobei das berührungsgeschützte Grundplattenmodul auf einer Stromsammelschiene in einer Einrastposition aufgerastet ist;
- Fig. 3: zeigt einen Ausschnitt auf eine an dem berührungsgeschützten Grundplattenmodul gemäß Figuren 1, 2 angebrachte erfindungsgemäße Sicherungsvorrichtung zum Sichern des Grundplattenmoduls auf einer Schiene;
- Fig. 4: zeigt eine Frontalsicht auf die in Fig. 3 dargestellte Sicherungsvorrichtung zum Sichern eines Grundplattenmoduls auf einer Schiene.

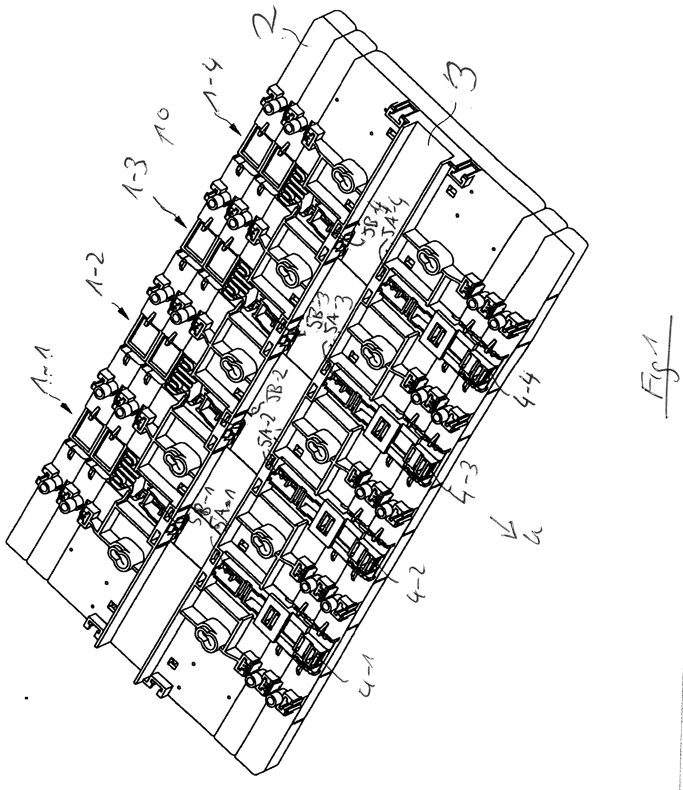

Fig. 1 zeigt beispielhaft als Anwendungsfall ein Objekt, welches durch mehrere an dem Objekt angeformte Sicherungsvorrichtungen auf einer Schiene angebracht werden kann. Bei dem in Fig. 1 dargestellten Anwendungsbeispiel sind mehrere Sicherungsvorrichtungen 1 an einem Unterteil 2 eines Grundplattenmoduls 2 angeformt, welches auf einer Schiene, beispielsweise einer Tragschiene, anzubringen ist. Fig. 1 zeigt perspektivisch eine Ansicht auf das Unterteil des Grundplattenmoduls 2 von hinten bzw. von der Rückseite. Das Unterteil 2 des Grundplattenmoduls 2 besitzt in dem dargestellten Anwendungsbeispiel eine Aussparung bzw. eine Kontur 3 zum Aufsetzen des berührungsgeschützten Grundplattenmoduls 2 auf eine Tragschiene. Weiterhin verfügt das Grundplattenmodul 2 bei dem dargestellten Anwendungsbeispiel über vier quer zu der Aussparungskontur 3 angeordnete integrierte bzw. angeformte Sicherungsvorrichtungen 1 zum Sichern des Grundplattenmoduls 2 als Objekt auf der Tragschiene. Bei dem in Fig. 1 dargestellten Ausführungsbeispiel sind die verschiedenen Sicherungsvorrichtungen 1 in dem Objekt integriert bzw. an das Objekt angeformt. Bei dem dargestellten Anwendungsbeispiel ist das Objekt ein Grundplattenmodul 2, insbesondere ein berührungsgeschütztes Grundplattenmodul, welches in einem Stromsammelsystem eingesetzt werden kann. Bei dem in Fig. 1 dargestellten Ausführungsbeispiel verläuft die Aussparung bzw. Aussparungskontur 3 zentral mittig in einer Längsrichtung des Grundplattenmoduls 2, wie in Fig. 1 dargestellt. Das Grundplattenmodul 2 kann auf eine Tragschiene, insbesondere eine Hutschiene, aufgesetzt und anschließend mithilfe der erfindungsgemäßen Sicherungsvorrichtungen 1-1, 1-2, 1-3, 1-4 auf der Schiene aufgerastet werden. Bei dem dargestellten Ausführungsbeispiel verfügt das anzubringende Objekt 2 bzw. Grundplattenmodul 2 über vier verschiedene gleichmäßig zueinander beabstandete Sicherungsvorrichtungen 1 zum Sichern des Objektes 2 auf der betreffenden Schiene. Wie man aus Fig. 1 erkennen kann, sind die verschiedenen Sicherungsvorrichtungen 1-1, 1-2, 1-3, 1-4 länglich ausgebildet und verlaufen quer zu der Kontur 3 bzw. im aufgerasteten Zustand quer zu der entsprechenden Schiene. Jede der vier verschiedenen Sicherungsvorrichtungen 1-i besitzt an einem Ende ein integriertes Betätigungselement 4-i. Bei Betätigung durch einen Nutzer werden an dem Betätigungselement vorgesehene Rasthaken 5A-i, 5B-i bewegt, welche geeignet sind, die Schiene zu hintergreifen. Dabei ist ein erster Rasthaken in eine Betätigungsrichtung des Betätigungselementes und ein zweiter Rasthaken in die zu der Betätigungsrichtung des Betätigungselementes entgegengesetzte Richtung bewegbar. Bei dem in Fig. 1 dargestellten Anwendungsbeispiel verfügt jede der an dem Objekt 2 angeformten Sicherungsvorrichtungen 1-1, 1-2, 1-3, 1-4 über ein zugehöriges Betätigungselement 4-1, 4-2, 4-3, 4-4. Bei dem in Fig. 1 dargestellten Anwendungsbeispiel liegen alle vier Betätigungselemente 4-1 bis 4-4 an einer Längsseite des an die Tragschienen anzubringenden Objektes 2 bzw. des an die Tragschienen anzubringenden Grundplattenmoduls. Die Betätigungselemente 4-i können daher durch einen Nutzer bei der Montage ohne Weiteres erreicht werden und mithilfe eines Werkzeuges, insbesondere eines Schraubendrehers, betätigt werden.

Bei dem in Fig. 1 dargestellten Ausführungsbeispiel verfügt jede Sicherungsvorrichtung 1-i über zugehörige aneinander gegenüberliegende Rasthaken 5A, 5B. Auf der einen Seite der Kontur 3 sind erste Rasthaken 5A-1, 5A-2, 5A-3, 5A-4 vorgesehen, die in einer Betätigungsrichtung der zugehörigen Betätigungselemente 4-1, 4-2, 4-3, 4-4 bewegbar sind. Bei dem in Fig. 1 dargestellten Anwendungsbeispiel befinden sich die verschiedenen Betätigungselemente 4-i an der unteren Längsseite des anzubringenden Grundplattenmoduls 2. Werden die Betätigungselemente 4-i beispielsweise mithilfe eines Schraubendrehers nach unten (U) gezogen, werden die ersten Rasthaken 5A-i der verschiedenen Sicherungsvorrichtungen 1-i entsprechend der Bewegungsrichtung des Betätigungselementes ebenfalls nach unten bewegt. Auf der gegenüberliegenden Seite der Kontur 3 befinden sich die gegenüberliegenden zweiten Rasthaken 5B-1, 5B-2, 5B-3, 5B-4 der verschiedenen Sicherungsvorrichtungen 1-i. Bei Betätigung der Betätigungselemente 4-i werden diese zweiten Rasthaken in die zu der Betätigungsrichtung des Betätigungselementes 4-i entgegengesetzte Richtung bewegt. Werden die Betätigungselemente 4-i beispielsweise mithilfe eines Schraubendrehers nach unten gezogen bzw. bewegt, bewegen sich die zweiten Rasthaken 5B-i der Sicherungsvorrichtungen 1-i in die entgegengesetzte Richtung, d.h. nach oben (O). Die durch die Betätigung der Betätigungselemente 4-i auseinanderbewegten gegenüberliegenden Rasthaken 5A-i, 5B-i gelangen in eine Parkposition bzw. Freigabeposition, bei der die Schiene zum Lösen der Vorrichtung 1 von der betreffenden Schiene freigegeben wird. Ein Endanschlag verhindert vorzugsweise ein übermäßiges Herausziehen des Betätigungselementes 4-i, beispielsweise mittels eines Schraubendrehers. Fig. 1 zeigt das Grundplattenmodul 2 mit mehreren Sicherungsvorrichtungen 1-i, die sich jeweils in einer Freigabe- bzw. Parkposition befinden. Ausgehend von dieser Parkposition kann das Grundplattenmodul 2 auf eine Tragschiene aufgesetzt und anschließend montiert werden. Hierzu wird das Grundplattenmodul 2 als anzubringendes bzw. zu sicherndes Objekt in seiner dafür vorgesehenen Aufnahmekontur 3 auf die Tragschiene aufgesetzt und anschließend die an der unteren Längsseite vorgesehenen Betätigungselemente 4-i der Sicherungsvorrichtungen 1-i mithilfe eines Schraubendrehers nach unten gezogen, sodass sich die Rasthaken der verschiedenen Sicherungsvorrichtungen 1-i aufeinander zubewegen, bis eine Einrastposition erreicht ist, bei der die gegenüberliegenden Rasthaken die Tragschiene hintergreifen.

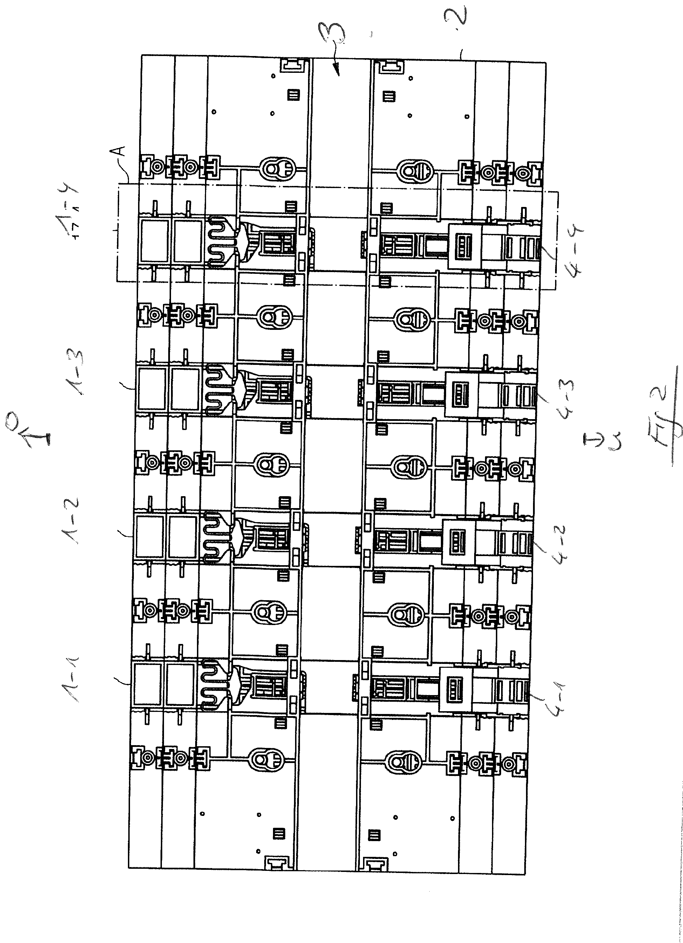

Fig. 2 zeigt eine Frontalansicht auf das anzubringende Objekt bzw. das anzubringende Grundplattenmodul 2 von der Rückseite des Grundplattenmoduls 2. Man erkennt die in der Mitte der Längsrichtung des Grundplattenmoduls 2 verlaufende Aufnahmekontur für die Tragschiene. Quer zu der in Längsrichtung verlaufende Kontur 3 und somit zu der Schiene sind vier gleichmäßig beabstandete Sicherungsvorrichtungen 1-i zur Anbringung des Grundplattenmoduls 2 auf die Tragschiene vorgesehen. Die Anzahl und der Abstand der verschiedenen Sicherungsvorrichtungen 1-i kann je nach Gewicht und Last des anzubringenden Objektes 2 variieren. Jede der Sicherungsvorrichtungen 1-i besitzt mindestens zwei aneinander gegenüberliegende Rasthaken, welche geeignet sind, die betreffende Schiene zu hintergreifen, und die sich bei Betätigung des jeweiligen Betätigungselementes 4-i der Sicherungsvorrichtung 1-i in entgegengesetzte Richtungen bewegen.

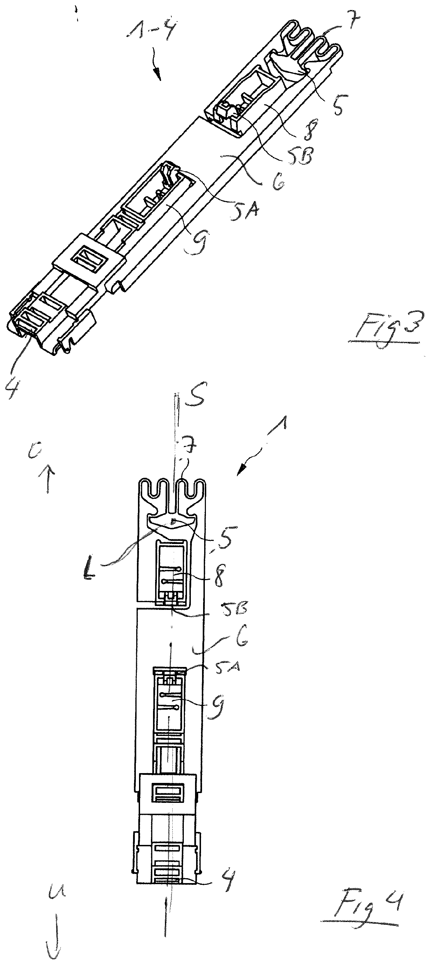

Fig. 3 zeigt perspektivisch beispielhaft die in Fig. 2 dargestellte vierte Sicherungsvorrichtung 1-4. Jede der in den Figuren 1, 2 dargestellten verschiedenen Sicherungsvorrichtungen 1-i besitzt vorzugsweise die gleiche Form wie die in Fig. 3 dargestellte Sicherungsvorrichtung 1-4. Fig. 4 zeigt eine Frontalansicht auf die in Fig. 3 dargestellte Sicherungsvorrichtung 1. Das Rastbauelement bzw. die Sicherungsvorrichtung 1, die zur Montage des Grundplattenmoduls 2 an eine Tragschiene dient, besitzt bei dem in den Figuren 3, 4 dargestellten Ausführungsbeispiel einen Umlenkhebel 5, der an einem Grundkörper 6 der Sicherungsvorrichtung 1 über eine mäanderförmige Verbindung 7 angeformt bzw. angespritzt ist und einen zentralen Lagerpunkt 2 aufweist. Bei dem dargestellten Ausführungsbeispiel ist der Umlenkhebel 5 in das Rastbauelement bzw. in die Sicherungsvorrichtung 1 integriert und über mäanderförmige Filmscharniere angeformt. Die mäanderförmige Filmscharniere garantieren dabei eine maximale Bewegungsfreiheit. Das Rastbauelement bzw. die Sicherungsvorrichtung 1 besitzt bei dem dargestellten Ausführungsbeispiel ferner integrierte Rückstellfedern 8, 9. Alternativ kann auch eine Fremdfederung durch Druckfedern erfolgen. Bei dem in Fig. 4 dargestellten Ausführungsbeispiel ist die Sicherungsvorrichtung 1 symmetrisch ausgebildet und besitzt eine Symmetrieachse S. Der Umlenkhebel 5 ist ebenfalls symmetrisch ausgebildet und besitzt einen zentralen Lagerpunkt L, der sich vorzugsweise auf der Symmetrieachse S der Sicherungsvorrichtung 1 befindet. Der Lagerpunkt L des Umlenkhebels 5 liegt somit auf der Längsachse bzw. Symmetrieachse S des länglich ausgebildeten Grundkörpers 6 der Sicherungsvorrichtung 1. Bei Betätigung des Betätigungselementes 4 bewegt sich der Umlenkhebel 5 rotatorisch um seinen Lagerpunkt L, sodass sich der zweite Rasthaken 5B in die zu der Betätigungsrichtung des Betätigungselementes 4 entgegengesetzte Richtung bewegt. Die beiden gegenüberliegenden Rasthaken 5A, 5B besitzen jeweils angeformte zugehörige Rückstellfedern 8, 9. Bei dem in den Fig. 3, 4 dargestellten Ausführungsbeispiel sind die Rückstellfedern 8, 9 in den Grundkörper 6 der Sicherungsvorrichtung 1 integriert. Alternativ können die Rückstellfedern 8, 9 auch durch separate Federelemente gebildet werden. Das Sicherungsbauelement bzw. Rastbauelement 1 verfügt über einen Bedienpunkt bzw. ein Betätigungselement 4 für die Betätigung durch einen Nutzer bzw. Bediener. Das Rastbauelement bzw. die Sicherungsvorrichtung 1 ist derart ausgelegt, dass durch den an der Sicherungsvorrichtung 1 angespritzten Umlenkhebel 5 eine von der einen Seite erfolgte Bedien- bzw. Betätigungsbewegung derart umgelenkt wird, dass sich die beiden Rasthaken 5A, 5B in entgegengesetzte Richtungen bewegen. Bei Betätigung des Betätigungselementes 4 bewegt sich der Umlenkhebel 5 rotatorisch um den Lagerpunkt L, sodass sich eines der gegenüberliegenden Rasthaken in die zu der Betätigungsrichtung entgegengesetzte Richtung bewegt. Wird beispielsweise das Betätigungselement 4 nach unten U gezogen, bewegt sich der auf der Seite des Betätigungselementes 4 befindliche erste Rasthaken 5A in die gleiche Richtung, d.h. in Betätigungsrichtung des Betätigungselementes 4, und der andere gegenüberliegende Rasthaken 5B in die entgegengesetzte Richtung, d.h. nach oben O. Wird umgekehrt das Betätigungselement 4 aus einer ausgezogenen Stellung zurück nach oben (O) bewegt, bewegt sich der erste Rasthaken 5A in die gleiche Richtung, d.h. ebenfalls nach oben, während sich der gegenüberliegende zweite Rasthaken 5B nach unten (U) bewegt, bis die beiden Rasthaken eine Einrastposition erreichen, bei der sie die Schiene sicher hintergreifen. Die beiden Verriegelungshaken 5A, 5B können in einem verriegelten Zustand eine Schiene, insbesondere eine Hutschiene bzw. Tragschiene, hintergreifen, sodass das Objekt bzw. das Grundplattenmodul 2 nicht mehr von der Schiene abgenommen werden kann. Wird das Rastbauelement bzw. die Sicherungsvorrichtung 1 mithilfe des Betätigungselementes 4 mit einem Schraubendreher betätigt bzw. gezogen, bewegt sich der angeformte erste Rasthaken 5A ebenfalls gleichzeitig in die gleiche Richtung, wobei gleichzeitig der Umlenkhebel 5 aus der in Fig. 4 dargestellten symmetrischen mittigen Lage rotatorisch um die Rotationsachse bewegt wird, wodurch sich der andere gegenüberliegende Rasthaken 5B in die entgegengesetzte Richtung bewegt. Wird die Betätigungseinrichtung 4 beispielsweise weiter nach unten gezogen, kann bei einer möglichen Ausführungsform die Sicherungsvorrichtung 1 bzw. das Rastbauelement in eine Parkposition einschnappen, sodass der Anwender bzw. der Nutzer bei einer Montage des Objektes auf einer Schiene das Rastbauelement bzw. die Sicherungsvorrichtung 1 aktiv in die verriegelte Rastposition zurücklegen muss, beispielsweise indem er das Rastbauelement manuell zurückdrückt oder mithilfe eines Schraubendrehers betätigt. Die Bedienung der durch die Rastbauelemente bzw. Sicherungsvorrichtung 1-i gebildeten Befestigungsmittel kann durch einen Nutzer in einfacher Weise durch Betätigung der Betätigungselemente 4-i, die sich am Rande des berührungsgeschützten Grundplattenmoduls befinden, erfolgen. Ein Vorteil des erfindungsgemäßen doppelseitig wirkenden Rastbauelements bzw. Sicherungselementes besteht darin, dass ein Objekt, beispielsweise ein flächiges Grundplattenmodul 2, frontal ohne ein Verkippen auf eine Tragschiene bzw. Hutschiene aufgesetzt werden kann. Hiermit können auch sehr große Plattenmodule bzw. flächige Module mithilfe der erfindungsgemäßen Sicherungsvorrichtung 1 ohne Probleme auf eine Schiene aufgesetzt werden. Bei einer möglichen Ausführungsform besteht die erfindungsgemäße Sicherungsvorrichtung 1, insbesondere dessen länglich ausgebildeter Grundkörper, aus Kunststoff. Bei dem in den Figuren 1 bis 4 dargestellten Ausführungsbeispiel ist die erfindungsgemäße Sicherungsvorrichtung 1 an das anzubringende Objekt angeformt. Bei einer alternativen Ausführungsform kann die Sicherungsvorrichtung 1 an dem jeweiligen Objekt mechanisch angebracht werden, beispielsweise durch Einrasten oder Anschrauben. Dabei werden eine oder mehrere Sicherungsvorrichtungen 1 an ein Gehäuse des anzubringenden Objektes angeschraubt oder mittels Schnappverbindungen angebracht. Bei dem in den Figuren 1 bis 4 dargestellten Anwendungsbeispiel handelt es sich bei dem zu sichernden Objekt um ein flächiges Grundplattenmodul 2. Bei alternativen Ausführungsformen kann es sich bei dem anzubringenden Objekt um ein beliebiges Gehäuse eines Gerätes, beispielsweise eines Elektrogerätes, handeln, das an eine Tragschiene oder Stromsammelschiene angebracht werden kann. Bei dem in den Figuren 1 bis 4 dargestellten Ausführungsbeispiel ist das Objekt 2 auf eine einzige Schiene angebracht, da das Objekt eine einzige entsprechende Aufnahmekontur 3 besitzt. Weiterhin ist es möglich, das Objekt 2 auch auf mehrere Schienen angebracht werden kann, wobei es sich bei den Schienen um Tragschienen und/oder stromführende Schienen handeln kann. Für jede Schiene können eine oder mehrere Sicherungsvorrichtungen 1 gemäß der Erfindung vorgesehen werden. beispielsweise besitzt das Gehäuse eines anzubringenden Objektes Konturen für drei Stromsammelschienen, die zueinander parallel verlaufen, wobei an jeder Aufnahmekontur 3 eine oder mehrere erfindungsgemäße Sicherungsvorrichtungen 1 vorgesehen sein können. Bei dem in Fig. 1 dargestellten Ausführungsbeispiel befinden sich alle Betätigungselemente 4-i auf einer Seite. Bei einer alternativen Ausführungsform können Betätigungselemente für verschiedene Sicherungsvorrichtungen 1 auf verschiedenen Seiten, beispielsweise auf zwei gegenüberliegenden Seiten bzw. Längsseiten eines Objektes vorgesehen sein, beispielsweise zur Betätigung verschiedener Sicherungsvorrichtungen 1, die an verschiedenen Aufnahmekonturen vorgesehen sind. Bei dem in den Figuren 1 bis 4 dargestellten Ausführungsbeispiel ist der Umlenkhebel 5 in der Sicherungsvorrichtung 1 integriert. Bei einer alternativen Ausführungsform kann der Umlenkhebel 5 auch durch ein separates Bauteil gebildet sein. Bei dieser Ausführungsform ist das Rastbauelement bzw. die Sicherungsvorrichtung 1 somit mehrteilig ausgebildet. Bei einer weiteren möglichen Ausführungsform wird dem Anwender bzw. Nutzer die Einrastposition und/oder Parkposition optisch angezeigt. Beispielsweise ist in dem anzubringenden Objekt 2, beispielsweise dem Grundplattenmodul 2, vorne eine Aussparung vorgesehen, die bei Betätigung der Betätigungseinrichtung 4 und somit erfolgter Betätigung des Umlenkhebels 5 optisch anzeigt, ob sich die Rastvorrichtung bzw. die Sicherungsvorrichtung 1 in einer Einrastposition oder Parkposition befindet. Dies ist für den Anwender hilfreich, da insbesondere bei flächigen Objekten bzw. Plattenmodulen der Nutzer bzw. Anwender die Stellung der Rasthaken 5A, 5B während der Montage des anzubringenden Objektes 2 nicht ohne Weiteres direkt beobachten bzw. sehen kann. Bei dem in den Figuren 1 bis 4 dargestellten Ausführungsbeispiel sind die Rastvorrichtungen bzw. Sicherungsvorrichtungen 1-i gleichmäßig beabstandet und fest an das Gehäuse des Objektes angeformt. Bei einer alternativen Ausführungsform können die Sicherungsvorrichtungen 1-i entlang einer Aufnahmekontur 3 in Längsrichtung manuell verschoben werden, beispielsweise um Montagebereiche des Grundplattenmoduls 2, an dem schwerere Lasten bzw. Geräte angebracht werden, abzusichern bzw. deren Gewicht sicher auf die Tragschiene zu übertragen. Bei dieser Ausführungsform sind somit die Sicherungsvorrichtungen 1-i relativ zu dem Gehäuse 2 des anzubringenden Objektes 2 lateral in Längsrichtung der Aufnahmekontur 3 verschiebbar, wobei ihr Abstand zueinander verändert werden kann. Bei einer möglichen Ausführungsvariante kann die Anzahl der Sicherungsvorrichtungen 1-i je nach Anwendungsfall und abzustützender Last durch den Nutzer verändert werden, indem mehr oder weniger Sicherungsvorrichtungen 1-i an dem Grundplattenmodul 2 des zu sichernden Objekts vorgesehen werden. Die erfindungsgemäße Sicherungsvorrichtung 1 eignet sich zum Sichern bzw. Befestigen beliebiger Objekte auf unterschiedlichen Schienen, insbesondere Trag- oder stromführenden Schienen. Die erfindungsgemäße Sicherungsvorrichtung 1 ist einfach bedienbar und erlaubt eine sehr schnelle Montage bzw. Demontage eines Objektes auf einer Schiene.

### BEZUGSZEICHEN

- 1: Vorrichtung
- 2: zu sicherndes Objekt
- 3: Kontur
- 4: Betätigungselement
- 5A, 5B: Rasthaken
- 6: Grundkörper
- 7: Verbindung
- 8, 9: Rückstellfedern

## Patentansprüche

1. Vorrichtung (1) zum Sichern eines Objektes (2) auf einer Schiene, mit
einem länglich ausgebildeten, quer auf die Schiene aufsetzbaren Grundkörper (6), der an einem Ende ein integriertes Betätigungselement (4) aufweist, das bei Betätigung durch einen Nutzer in dem Betätigungselement integrierte gegenüberliegende Rasthaken (5A, 5B), welche geeignet sind, die Schiene zu hintergreifen, in entgegengesetzte Richtungen bewegt, wobei ein erster Rasthaken (5A) in eine Betätigungsrichtung des Betätigungselementes (4) und ein zweiter Rasthaken (5B) in die zu der Betätigungsrichtung des Betätigungselementes (4) entgegengesetzte Richtung bewegbar ist, wobei der zweite Rasthaken (5B) durch ein in der Vorrichtung (1) integriertes Umlenkelement (5) in die zu der Betätigungsrichtung des Betätigungselementes entgegengesetzte Richtung bewegt wird, wobei das Umlenkelement (5) an einem dem Betätigungselement gegenüberliegenden Ende des Grundkörper (6) an der Vorrichtung (1) angeformt ist, wobei das Umlenkelement (5) einen Umlenkhebel aufweist,
wobei der Umlenkhebel (5) einen zentralen Lagerpunkt (L) besitzt, wobei bei Betätigung des Betätigungselementes (4) sich der Umlenkhebel rotatorisch um seinen Lagerpunkt (L) bewegt, und wobei die beiden gegenüberliegenden Rasthaken (5A, 5B) zwischen dem Betätigungselement (4) und dem Umlenkelement (5) in Längsrichtung des Grundkörpers (6) vorgesehen sind.

2. Vorrichtung nach Anspruch 1,
wobei der Umlenkhebel (5) über eine mäanderförmige Verbindung (7) an der Vorrichtung (1) angeformt ist.

3. Vorrichtung nach einem der vorangehenden Ansprüche 1 bis 2,
wobei der Lagerpunkt (L) des Umlenkhebels (5) auf der Längsachse (S) des länglich ausgebildeten Grundkörpers (6) liegt.

4. Vorrichtung nach einem der vorangehenden Ansprüche 1 bis 3,
wobei der Umlenkhebel (5) bei Betätigung des Betätigungselementes sich rotatorisch um den Lagerpunkt (L) bewegt, sodass sich der zweite Rasthaken (5B) in die zu der Betätigungsrichtung entgegengesetzte Richtung bewegt.

5. Vorrichtung nach einem der vorangehenden Ansprüche 1 bis 4,
wobei die gegenüberliegenden Rasthaken (5A, 5B) jeweils angeformte Rückstellfedern (8, 9) aufweisen.

6. Vorrichtung nach Anspruch 5,
wobei die Rückstellfedern (8, 9) in den Grundkörper (6) integriert sind oder durch separate Federelemente gebildet werden.

7. Vorrichtung nach einem der vorangegangenen Ansprüche 1 bis 6,
wobei die Vorrichtung (1) an das auf die Schiene anzubringende Objekt (2) angeformt ist.

8. Vorrichtung nach einem der vorangehenden Ansprüche 1 bis 7,
wobei die durch Betätigung des Betätigungselementes (4) aufeinander zubewegten gegenüberliegenden Rasthaken (5A, 5B) in einer Einrastposition die Schiene hintergreifen.

9. Vorrichtung nach einem der vorangehenden Ansprüche 1 bis 8,
wobei die durch die Betätigung des Betätigungselementes (4) auseinander bewegten gegenüberliegenden Rasthaken (5A, 5B) in einer Parkposition die Schiene zum Lösen der Vorrichtung (1) von der Schiene freigeben.

10. Vorrichtung nach einem der vorangehenden Ansprüche 1 bis 9,
wobei die Rasthaken (5A, 5B) derart ausgebildet sind, Schienen unterschiedlicher Höhe zu hintergreifen.

11. Vorrichtung nach einem der vorangehenden Ansprüche 1 bis 10,
wobei das Betätigungselement (4) durch einen Nutzer mittels eines Schraubendrehers betätigbar ist.

12. Vorrichtung nach einem der vorangehenden Ansprüche 1 bis 11,
wobei der länglich ausgebildete Grundkörper (6) der Vorrichtung (1) aus Kunststoff besteht.

13. Vorrichtung nach einem der vorangehenden Ansprüche 1 bis 12,
wobei der Umlenkhebel (5) spiegelsymmetrisch ausgebildet ist.

## Claims

1. Device (1) for securing an object (2) on a rail, having an elongated base body (6) that can be placed transversely on the rail and comprises on one end an integrated actuating element (4) that when actuated by a user moves latching hooks (5A, 5B) in opposite directions, said latching hooks being integrated lying opposite one another in the actuating element and being suitable for engaging behind the rail, wherein a first latching hook (5A) is moveable in an actuating direction of the actuating element (4) and a second latching hook (5B) is movable in the direction opposite the actuating direction of the actuating element (4), wherein the second latching hook (5B) is moved by means of a deflecting element (5) that is integrated in the device (1) in the direction that is opposite the actuating direction of the actuating element, wherein the deflecting element (5) is formed as one on the device (1) on an end of the base body (6), said end lying opposite the actuating element, wherein the deflecting element (5) comprises a deflecting lever,
wherein the deflecting lever (5) comprises a central bearing point (L), wherein when the actuating element (4) is actuated the deflecting lever moves in a rotational manner about its bearing point (L), and wherein the two opposite-lying latching hooks (5A, 5B) are provided between the actuating element (4) and the deflecting element (5) in the longitudinal direction of the base body (6).

2. Device according to claim 1,
wherein the deflecting lever (5) is formed as one on the device (1) by way of a meandering-shaped connection (7).

3. Device according to one of the preceding claims 1 to 2, wherein the bearing point (L) of the deflecting lever (5) lies on the longitudinal axis (S) of the elongated base body (6).

4. Device according to one of the preceding claims 1 to 3, wherein when the actuating element is actuated the deflecting lever (5) moves in a rotational manner about the bearing point (L) with the result that the second latching hook (5B) moves in the direction opposite the actuating direction.

5. Device according to one of the preceding claims 1 to 4, wherein the opposite-lying latching hooks (5A, 5B) comprise respectively return springs (8, 9) that are formed as one thereon.

6. Device according to claim 5,
wherein the return springs (8, 9) are integrated into the base body (6) or are formed by means of separate spring elements.

7. Device according to one of the preceding claims 1 to 6, wherein the device (1) is formed as one on the object (2) that is to be attached to the rail.

8. Device according to one of the preceding claims 1 to 7, wherein the latching hooks (5A, 5B) that lie opposite one another and are moved towards one another by means of the actuating element (4) being actuated engage behind the rail in a latching position.

9. Device according to one of the preceding claims 1 to 8, wherein the latching hooks (5A, 5B) that lie opposite one another and are moved apart from one another by means of the actuating element (4) being actuated in a park position release the rail in order to detach the device (1) from the rail.

10. Device according to one of the preceding claims 1 to 9, wherein the latching hooks (5A, 5B) are embodied in such a manner so as to engage behind rails of different heights.

11. Device according to one of the preceding claims 1 to 10, wherein the actuating element (4) can be actuated by a user by means of a screwdriver.

12. Device according to one of the preceding claims 1 to 11, wherein the elongated base body (6) of the device (1) is embodied from synthetic material.

13. Device according to one of the preceding claims 1 to 12, wherein the deflecting lever (5) is embodied in a mirror-symmetrical manner.

## Revendications

1. Dispositif (1) pour fixer un objet (2) sur un rail, comprenant
un corps de base allongé (6) qui peut être posé transversalement sur le rail et qui présente à une extrémité un élément d'actionnement intégré (4) qui, lorsqu'il est actionné par un utilisateur, déplace dans des directions opposées des crochets d'encliquetage situés l'un en face de l'autre (5A, 5B) qui sont intégrés dans l'élément d'actionnement et qui sont adaptés pour s'engager derrière le rail, dans lequel un premier crochet d'encliquetage (5A) peut être déplacé dans une direction d'actionnement de l'élément d'actionnement (4) et un deuxième crochet d'encliquetage (5B) peut être déplacé dans la direction opposée à la direction d'actionnement de l'élément d'actionnement (4), dans lequel le deuxième crochet d'encliquetage (5B) est déplacé par un élément de déviation (5) intégré dans le dispositif (1) dans la direction opposée à la direction d'actionnement de l'élément d'actionnement, dans lequel l'élément de déviation (5) est formé sur le dispositif (1) à une extrémité du corps de base (6) opposée à l'élément d'actionnement, dans lequel l'élément de déviation (5) présente un levier de déviation,
dans lequel le levier de déviation (5) présente un point d'appui central (L), dans lequel, lors de l'actionnement de l'élément d'actionnement (4), le levier de déviation se déplace en rotation autour de son point d'appui (L), et dans lequel les deux crochets d'encliquetage situés l'un en face de l'autre (5A, 5B) sont prévus entre l'élément d'actionnement (4) et l'élément de déviation (5) dans la direction longitudinale du corps de base (6).

2. Dispositif selon la revendication 1,
dans lequel le levier de déviation (5) est formé sur le dispositif (1) par l'intermédiaire d'une liaison méandriforme (7).

3. Dispositif selon l'une des revendications 1 à 2 précédentes,
dans lequel le point d'appui (L) du levier de déviation (5) est situé sur l'axe longitudinal (S) du corps de base allongé (6).

4. Dispositif selon l'une des revendications 1 à 3 précédentes,
dans lequel, lorsque l'élément d'actionnement est actionné, le levier de déviation (5) se déplace en rotation autour du point d'appui (L) de telle sorte que le deuxième crochet d'encliquetage (5B) se déplace dans la direction opposée à la direction d'actionnement.

5. Dispositif selon l'une des revendications 1 à 4 précédentes,
dans lequel les crochets d'encliquetage situés l'un en face de l'autre (5A, 5B) présentent respectivement des ressorts de rappel (8, 9) formés sur eux.

6. Dispositif selon la revendication 5,
dans lequel les ressorts de rappel (8, 9) sont intégrés dans le corps de base (6) ou sont formés par des éléments ressort séparés.

7. Dispositif selon l'une des revendications 1 à 6 précédentes,
dans lequel le dispositif (1) est formé sur l'objet (2) à fixer sur le rail.

8. Dispositif selon l'une des revendications 1 à 7 précédentes,
dans lequel les crochets d'encliquetage situés l'un en face de l'autre (5A, 5B) qui sont déplacés l'un vers l'autre par actionnement de l'élément d'actionnement (4) s'engagent derrière le rail dans une position d'encliquetage.

9. Dispositif selon l'une des revendications 1 à 8 précédentes,
dans lequel les crochets d'encliquetage situés l'un en face de l'autre (5A, 5B) qui sont éloignés l'un de l'autre par actionnement de l'élément d'actionnement (4) libèrent le rail pour détacher le dispositif (1) du rail dans une position de parking.

10. Dispositif selon l'une des revendications 1 à 9 précédentes,
dans lequel les crochets d'encliquetage (5A, 5B) sont conçus pour s'engager derrière des rails de différentes hauteurs.

11. Dispositif selon l'une des revendications 1 à 10 précédentes,
dans lequel l'élément d'actionnement (4) peut être actionné par un utilisateur au moyen d'un tournevis.

12. Dispositif selon l'une des revendications 1 à 11 précédentes,
dans lequel le corps de base allongé (6) du dispositif (1) est constitué de matière plastique.

13. Dispositif selon l'une des revendications 1 à 12 précédentes,
dans lequel le levier de déviation (5) est conçu avec une symétrie en miroir.
